(19) **Europäisches Patentamt European Patent Office Office européen des brevets**

(11) **EP 1 195 961 B1**

(12) **EUROPEAN PATENT SPECIFICATION**

(45) Date of publication and mention
of the grant of the patent:
**07.02.2007 Bulletin 2007/06**

(51) Int Cl.:
**H04L 27/26** (2006.01)

(21) Application number: **01123480.4**

(22) Date of filing: **28.09.2001**

(54) **Frequency offset correction in multicarrier receivers**

Korrektur eines Frequenzversatzes in Mehrträgerempfängern

Correction de décalages en fréquence dans des récepteurs multiporteuses

(84) Designated Contracting States:
**DE FR GB**

(30) Priority: **29.09.2000 KR 2000057326**

(43) Date of publication of application:
**10.04.2002 Bulletin 2002/15**

(73) Proprietor: **SAMSUNG ELECTRONICS CO., LTD.**
**Suwon-City, Kyungki-do (KR)**

(72) Inventors:
• **Seo,Jae-Hyun**
**SAMSUNG ELEC.CO.LTD. Int.Prop.Team**
**Suwon City, Kyungki-Do, 442-742 (KR)**
• **Han, Dong-Seog**
**SAMSUNG ELEC.CO.LTD., Int.Prop.Team**
**Suwon City, Kyungki-do, 442-742 (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**WO-A-00/33496          GB-A- 2 334 836**

• **MOOSE P H: "A TECHNIQUE FOR ORTHOGONAL FREQUENCY DIVISION MULTIPLEXING FREQUENCY OFFSET CORRECTION" IEEE TRANSACTIONS ON COMMUNICATIONS, IEEE INC. NEW YORK, US, vol. 42, no. 10, October 1994 (1994-10), pages 2908-2914, XP002019915 ISSN: 0090-6778**

• **KIM Y-J ET AL: "A NEW FAST SYMBOL TIMING RECOVERY ALGORITHM FOR OFDM SYSTEMS" IEEE TRANSACTIONS ON CONSUMER ELECTRONICS, IEEE INC. NEW YORK, US, vol. 44, no. 3, August 1998 (1998-08), pages 1134-1141, XP000851631 ISSN: 0098-3063**

• **PALIN A ET AL: "Symbol synchronization in OFDM system for time selective channel conditions" ELECTRONICS, CIRCUITS AND SYSTEMS, 1999. PROCEEDINGS OF ICECS '99. THE 6TH IEEE INTERNATIONAL CONFERENCE ON PAFOS, CYPRUS 5-8 SEPT. 1999, PISCATAWAY, NJ, USA,IEEE, US, vol. 3, 5 September 1999 (1999-09-05), pages 1581-1584, XP010361802 ISBN: 0-7803-5682-9**

• **TOMBA L ET AL: "EFFECT OF CARRIER PHASE NOISE AND FREQUENCY OFFSET ON THE PERFORMANCE OF MULTICARRIER CDMA SYSTEMS" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, vol. VOL. 3, 23 June 1996 (1996-06-23), pages 1513-1517, XP000625062 ISBN: 0-7803-3251-2**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates generally to an OFDM (Orthogonal 11 Frequency Division Multiplexing) system, and in particular, to an apparatus and method for acquiring frequency synchronization using a correlation between successive symbols.

OFDM is widely applied to digital transmission technology including DAB (Digital Audio Broadcasting, the digital TV, WLAN (Wireless Local Area Network), and WATM (Wireless Asynchronous Transfer Mode). The OFDM is a multi-carrier scheme in which transmission data is divided into a plurality of data, modulated with a plurality of sub-carriers, and transmitted in parallel.

While the OFDM scheme was not used widely because of its hardware complexity, it becomes advantageous as digital signal processing techniques such as FFT (Fast Fourier Transform and IFFT (Inverse Fast Fourier Transform) have been developed. The OFDM scheme is different from conventional FDM (Frequency Division Multiplexing) in that data is transmitted with orthogonality maintained among a plurality of sub-carriers. Therefore, optimal transmission efficiency can be obtained during high rate transmission. Due to this advantage, the OFDM has been implemented in diverse forms like an OFDM/TDMA (Orthogonal Frequency Division Multiplexing/Time Division Multiple Access) system and an OFDM/CDMA (Orthogonal Frequency Division Multiplexing/Code Division Multiple Access) system.

In the case that the Doppler effect occurs in view of channel characteristics or a tuner in a receiver is not stable, a transmission frequency may not be synchronized to a reception frequency in an OFDM transmission system. The unstable tuning between carriers produces a frequency offset which in turn changes the phase of an input signal. Consequently, orthogonality is lost between sub-carriers and the decoding performance of the system is deteriorated. In this case, a slight frequency offset becomes a significant cause of the system performance deterioration. Accordingly, frequency synchronization is essential to the OFDM transmission system to maintain orthogonality between sub-carriers.

In general, a frequency offset in a receiver is eliminated on a sub-carrier interval basis and can be expressed as an integer part and a decimal part by dividing the frequency offset by a sub-carrier interval. Here, elimination of an initial frequency offset corresponding to the integer part is coarse frequency synchronization and elimination of a residual offset corresponding to the decimal part after the coarse frequency synchronization is fine frequency synchronization.

The coarse frequency synchronization, however, takes a long time since the frequency offset of the integer part must repeatedly be compensated for to acquire frequency synchronization.

Besides, if the decimal part is a 1/2 of the sub-carrier interval of, say, 1KHz, errors possibly generated during estimation of the frequency offset of the integer part must be corrected and the frequency offset of the decimal part must be compensated for. Therefore, a long time is taken to acquire the fine frequency synchronization.

WO-A-00 33496 discloses a frequency synchronizing device for an OFDM/CDMA communication system which exchanges data using an OFDM frame including OFDM symbols each comprised of a plurality of data samples, and a guard interval inserted at the head of each symbol to prevent interference between the symbols. The frequency synchronizing device comprises a frequency corrector for compensating for a frequency offset of received analog data according to a frequency correction signal; an analog/digital converter for converting the received analog data to OFDM frame; and a frequency synchronizer for detecting copy data which is used for creating the guard interval from the OFDM frame and is comprised of some data samples out of the OFDM symbols, to sequentially estimate coarse, regular and fine frequency offsets, and providing the frequency corrector with the frequency correction signal corresponding to the estimated frequency offsets.

GB-A-2 334 836 discloses an AFC method or system in a digital broadcasting receiver comprises simultaneously extracting carrier indexes from the output data of a fast Fourier Transform unit 17 and obtaining complex conjugate of two adjacent OFDM symbols for each extracted carrier index and outputting the result as a signal d l,m, in a coarse mode, assuming a value n in a predetermined detection range, multiplying d l,m by a continual pilot location information vector P l,n, summing the continual pilot indexes for each assumed value of n, taking the absolute value of the summed result, and selecting the maximum value among the respective assumed value of n as the estimated value n' of the carrier offset, and outputting the carrier offset n' as an estimated value of n, in a fine mode, dividing the signal d l,m into two phase portions R1 and R2, adding at 36 R1 and R2, detecting a phase 38 from the summed value, and estimating the detected phase as a fraction portion of the carrier frequency offset, and multiplying at 37 R1 by the complex conjugate of R2, detecting a phase 40 from the multiplication value, and estimating the detected phase as a sampling frequency offset. The system provides coarse and fine AFC.

It is, therefore, the object of the present invention to provide a frequency offset compensating apparatus and method for reducing time required to acquire frequency synchronization and simplifying a frequency offset compensation process.

This object is solved by the subject matter of independent claims 1 and 12.

Preferred embodiments are specified in the dependent claims.

According to one aspect of the present invention, there is provided an apparatus and method for compensating for a frequency offset in an OFDM system. In a frequency offset compensating apparatus according to one aspect of the present invention, a correlating portion demodulates input data by fast Fourier transformation, delays a demodulated symbol by a predetermined period, and correlates a symbol demodulated during the delay to the delayed symbol. A pilot position detecting portion compares the correlation with a predetermined pilot position and extracts a correlation corresponding to the pilot position. A frequency offset compensating portion estimates a frequency offset to the extracted correlation if the extracted correlation is a predetermined maximum and shifts the phase of pilot data by the estimated frequency offset.

In a frequency offset compensating apparatus according to another aspect of the present invention, a correlating portion demodulates input data by fast Fourier transformation, delays a demodulated symbol by a predetermined period, and correlates a symbol demodulated during the delay to the delayed symbol. A pilot position detecting portion compares the correlation with a predetermined pilot position and extracts a correlation corresponding to the pilot position. A frequency offset compensating portion detects the maximum of extracted correlations, estimates a frequency offset by comparing the maximum correlation and adjacent correlations with a predetermined threshold, and shifts the phase of pilot data by the estimated frequency offset.

In a frequency offset compensating method according to a third aspect of the present invention, input data is demodulated by fast Fourier transformation and delayed a demodulated symbol by a predetermined period. A symbol demodulated during the delay is correlated to the delayed symbol. The correlation is compared with a predetermined pilot position and a correlation corresponding to the pilot position is extracted. A frequency offset is estimated to the extracted correlation if the extracted correlation is a predetermined maximum and the phase of pilot data is shifted by the estimated frequency offset.

In a frequency offset compensating method according to a fourth aspect of the present invention, input data is demodulated by fast Fourier transformation and delayed a demodulated symbol by a predetermined period. A symbol demodulated during the delay is correlated to the delayed symbol. The correlation is compared with a predetermined pilot position and a correlation corresponding to the pilot position is extracted. The maximum is detected from extracted correlations, a frequency offset is estimated by comparing the maximum correlation and adjacent correlations with a predetermined threshold, and the phase of pilot data is shifted by the estimated frequency offset.

The above object, features and advantages of the present invention will become more apparent from the following detailed description when taken in conjunction with the accompanying drawings in which:

FIG. 1 is a block diagram of a transmitter in an OFDM system to which the present invention is applied;
FIG. 2 is a block diagram of a receiver in the OFDM system;
FIG. 3 illustrates the structure of a signal frame in the OFDM system;
FIG. 4 is a block diagram of a frequency offset compensating apparatus according to an embodiment of the present invention;
FIGs. 5A and 5B illustrate outputs of an FFT (Fast Fourier Transformer) shown in FIG. 4;
FIG. 6 is a graph showing pilot correlations for use in acquiring coarse frequency synchronization according to the embodiment of the present invention;
FIG. 7 is a graph showing pilot correlations for use in acquiring fine frequency synchronization according to the embodiment of the present invention; and
FIG. 8 is a graph showing ratios of the greater of adjacent correlations to a maximum correlation corresponding to the decimal part of a frequency offset.

A preferred embodiment of the present invention will be described hereinbelow with reference to the accompanying drawings. In the following description, well-known functions or constructions are not described in detail since they would obscure the invention in unnecessary detail.

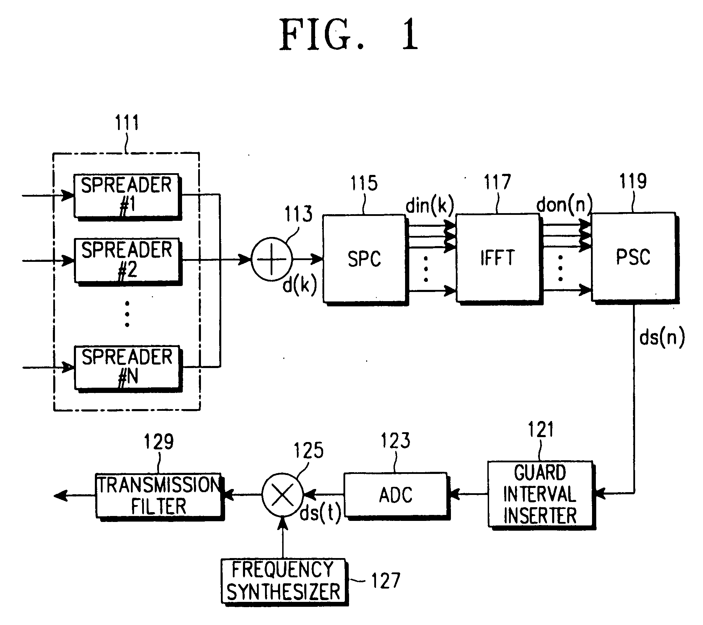

FIG. 1 is a block diagram of a transmitter in an OFDM system to which the present invention is applied. The OFDM system is incorporated into a CDMA system.

Referring to FIG. 1, a spreading portion 111 spreads transmission data (T) data with orthogonal codes and PN (Pseudorandom Noise) sequences. Both the transmitter and a receiver know orthogonal codes and PN sequences. An adder 113 sums the spread data received from the spreading portion 111 and outputs a serial signal d(k). A serial-to-parallel converter (SPC 115) converts the serial signal d(k) to a predetermined number of, say, N parallel data $d_{in}(k)$. The symbol length of the parallel data $d_{in}(k)$ is increased to N times the symbol length of the serial data d(k). An IFFT (Inverse Fast Fourier Transformer 117 modulates the parallel data $d_{in}(k$ with N sub-carriers and outputs modulation data $d_{on}(n)$. That is, the parallel data $d_{in}(k)$ is converted to a complex number corresponding to the phase and amplitude of each sub-carrier, assigned to the respective sub-carriers on a frequency spectrum, and inverse fast Fourier-transformed on a time spectrum. Thus, the parallel data $d_{in}(k)$ are modulated with the N sub-carriers to the modulation data $d_{on}(n)$ which can be expressed as

$$d_{on}(n) = \frac{1}{N} \sum_{k=n}^{N-1} d_{in}(k) e^{j2\pi nk/N} \quad (n = 1, 2, 3, 4, .., N)$$

$$..... (1)$$

A parallel-to-serial converter (PSC) 119 converts the parallel data $d_{on}(n)$ to serial data $d_s(n)$. A guard interval inserter 121 inserts guard intervals into the serial data $d_s(n)$. When a transmission channel causes inter-symbol interference (ISI), a guard interval is inserted between transmission symbols to absorb the inter-symbol interference. Consequently, orthogonality between sub-carriers can be maintained in the OFDM system.

A digital-to-analog converter (DAC) 123 converts the data received from the guard interval inserter 121 to an analog baseband signal $d_s(t)$. A mixer 125 mixes the signal $d_s(t)$ with a synthetic carrier frequency received from a frequency synthesizer 127 and outputs real transmission data P(t), given by

$$P(t) = d_s(t)e(jWct)$$

$$..... (2)$$

where Wc is the synthetic carrier frequency. A transmission filter 129 filters out the transmission data P(t) to a baseband signal and transmits the baseband signal.

Additive White Gaussian noise (AWGN) is added to the transmission data P(t) in the air during transmission to a receiver.

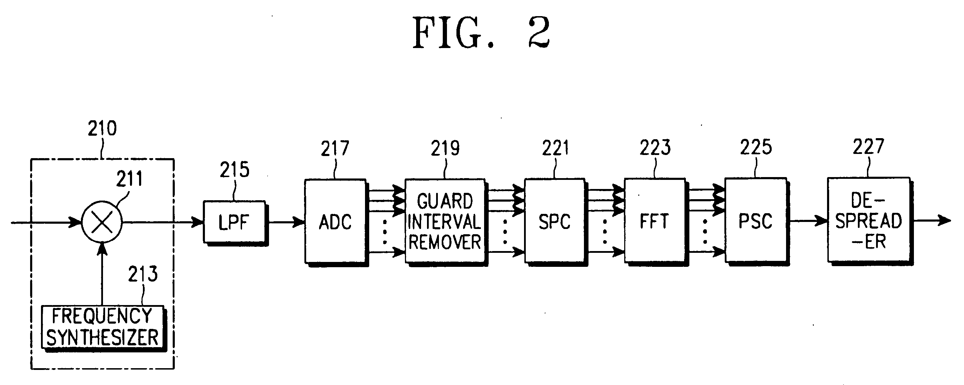

The structure of the receiver will be described with reference to FIG. 2.

FIG. 2 is a block diagram of the receiver in the OFDM system to which the present invention is applied.

A carrier signal including the AWGN is applied to the input of a multiplier 211. The multiplier 211 down-converts the frequency of the input carrier signal to an intermediate frequency (IF) by mixing the carrier signal with a predetermined local oscillation frequency synthesized in a frequency synthesizer 213. A low pass filter (LPF) 215 low-pass-filters the IF signal received from the multiplier 211 and an ADC 217 converts an IF signal received from the LPF 215 to a digital signal by sampling the IF signal at predetermined intervals. A guard interval remover 219 removes guard intervals from the digital signal. An SPC 221 converts the guard intervals-free signal received from the guard interval remover 219 to parallel data. An FFT 223 OFDM-demodulates the parallel data with a plurality of sub-carriers and a PSC 225 converts the demodulated parallel data to serial data by adding symbol data received in parallel. A despreader 227 despreads the serial symbol data, thereby recovering original data.

It is important to acquire frequency synchronization between the sub-carriers in the above receiver. The frequency synchronization makes it possible to maintain orthogonality between the sub-carriers and thus to decode a signal accurately. A frequency offset compensating apparatus for the frequency synchronization according to an embodiment of the present invention will be described below.

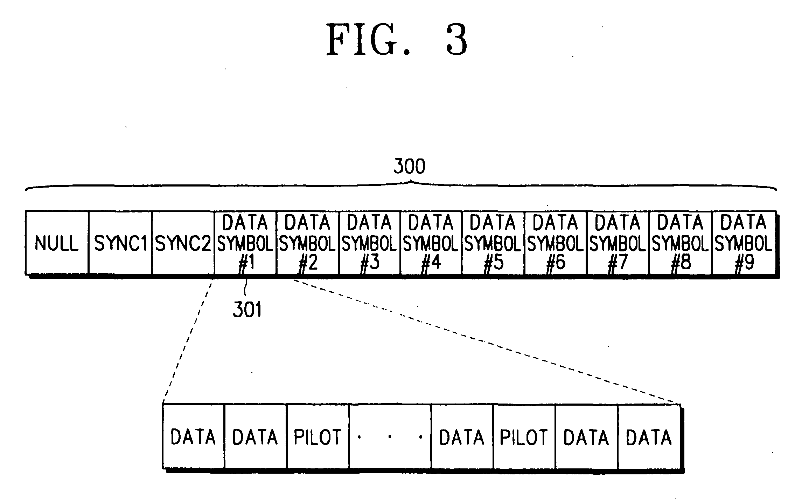

FIG. 3 illustrates the format of a signal frame used in the OFDM system shown in FIGs. 1 and 2.

Referring to FIG. 3, a frame 300 used in the OFDM system includes 12 symbols. A symbol NULL indicates the start of the frame 300 and symbols Sync #1 and Sync #2 are sync symbols, and data symbol #1 301 to data symbol #9 are real transmission data. A data symbol, say, data symbol #1 301 has a predetermined number of, for example, 256 data. A predetermined number of, for example, 10 pilot data are inserted in the 256 data so that the receiver can compensate for a frequency offset between sub-carriers by phase estimation of the pilot data.

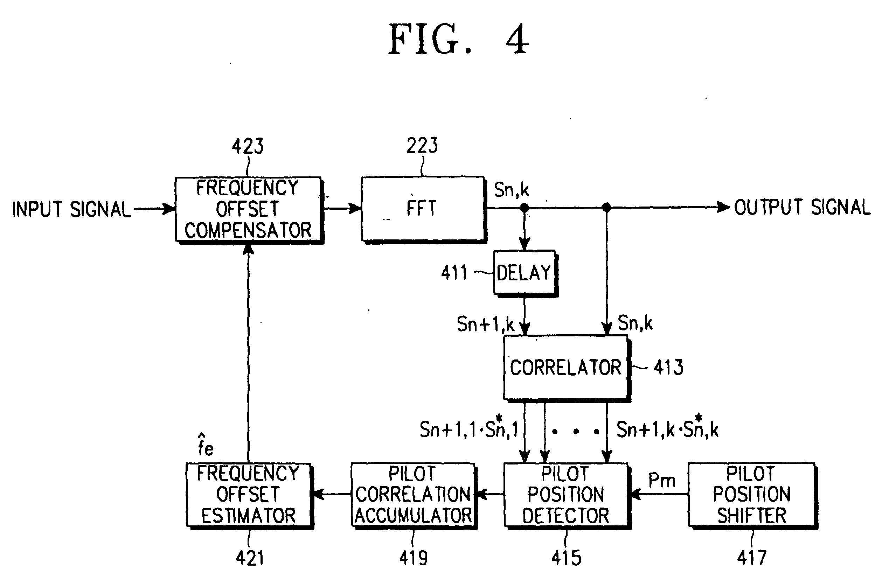

FIG. 4 is a block diagram of the frequency offset compensating apparatus according to the embodiment of the present invention.

As stated above, the FFT 223 OFDM-demodulates an input signal with a plurality of sub-carriers. The OFDM demodulation signals are in the format shown in FIG. 3.

Let the signals output from the FFT 223 be $S_{n,k}$ (n) is a symbol number, k is a sub-carrier number, and if K sub-carriers are used, $1 \le k \le K$. A delay 411 delays the symbol $S_{n,k}$ by one symbol period. A correlator 413 correlates the delayed symbol to a symbol $S_{n,k}$ currently received from the FFT 223 and feeds a correlation to a pilot position detector 415.

A correlation between an nth symbol and an (n+1)th symbol output from the correlator 413 can be expressed as

$$C_m = \left| \sum_{k=P_m} S_{n+1,k} \cdot S^*_{n,k} \right|$$

$$\ldots\ldots(3)$$

and information about the positions of pilot data is

$$P_m = \left[ p_1 + m, p_2 + m, \ldots, p_L + m \right]$$

$$\ldots\ldots(4)$$

where $P_m$ is a set of the numbers of sub-carriers with pilot data, m is an integer part of a frequency offset and $-M \leq m \leq M$, L is the number of pilots in one data symbol, and $p_i$ is the number of a sub-carrier with an ith pilot and $1 \leq i \leq M$.

When M = 20, the integer part of the frequency offset can be estimated to $\pm 20$ by

$$\hat{f}_o = \overset{\max}{\underset{m}{}} (C_m)$$

$$\ldots\ldots(5)$$

where the estimated integer part of the frequency offset, $\hat{f}_o$ is m when the correlation $C_m$ is a maximum, that is, when the correlation of pilot data is a maximum, as output from the pilot locator 415. A pilot position shifter 417 shifts a pilot position so that the pilot position detector 415 detects a pilot with the maximum correlation. The pilot correlation detected in the pilot position detector 415 is accumulated in a pilot correlation accumulator 419. The accumulated correlation is $C_m$. A frequency offset estimator 421 outputs an estimated integer part of a frequency offset, $\hat{f}_o$ to a frequency offset compensator 423. The frequency offset compensator 423 compensates for the integer part $\hat{f}_o$.

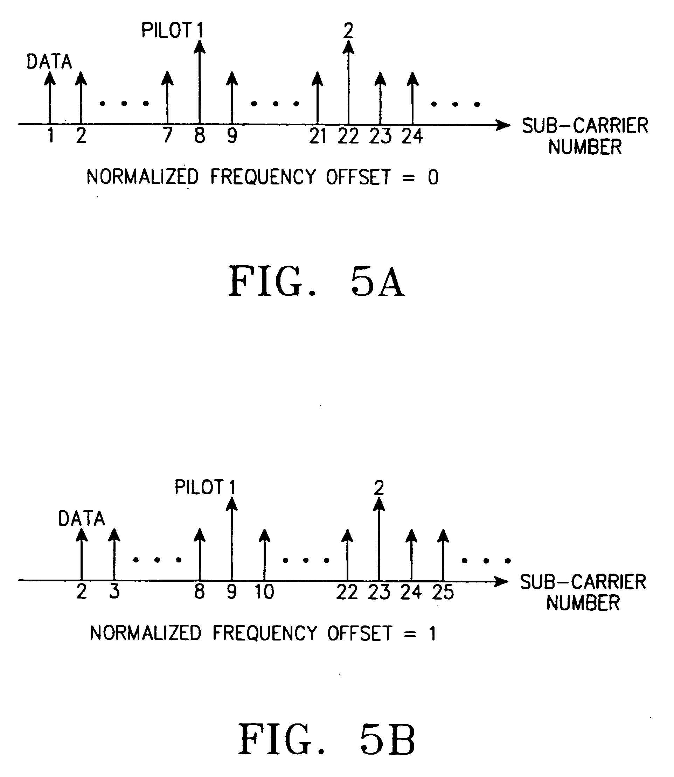

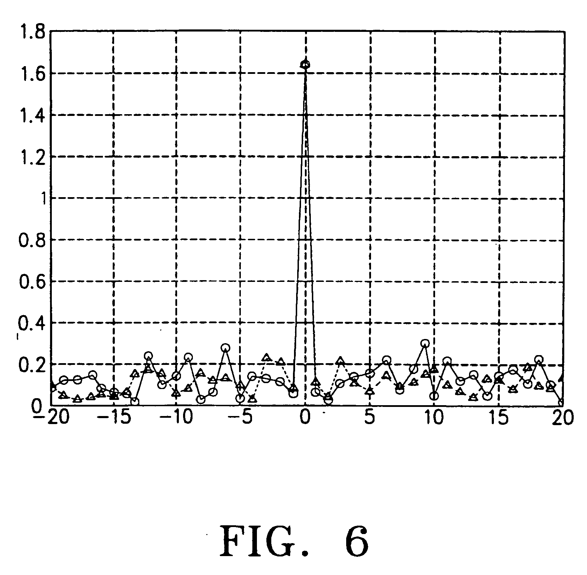

Compensation for the integer part of a frequency offset will be described referring to FIGs. 5A, 5B, and 6.

FIGs. 5A and 5B illustrate outputs of the FFT 223 shown in FIG. 4. FIG. 5 illustrates a signal with a frequency offset = 0 output from the FFT 223 in a frequency domain. Pilot data exists in sub-carriers #8, 22, ... ($p_1$ = 8, $p_2$ = 22, ...) and real data exists on the other sub-carriers in the symbol. $P_0$ = [8+0, 22+0, ...] correspond to pilot positions and thus $C_m$ is a maximum when m = 0.

For a frequency offset m = 1 as shown in FIG. 5B, $P_0$ = [8+0, 22+0, ...] does not correspond to the pilot positions. In view of m = 1, $P_1$ = [8+1, 22+1, ...] correspond to the pilot positions and thus $C_m$ is a maximum when m = 1. Thus, the integer part of a frequency offset is estimated to be 1.

FIG. 6 is a graph showing pilot correlations output from the pilot correlation accumulator 419 in the case of coarse frequency synchronization acquisition according to the embodiment of the present invention. In FIG. 6, the maximum correlation of data marked by circles is identical to that of data marked by triangles. Let two successive symbols circle-marked data and triangle-marked data be an nth symbol and an (n+1)th symbol, respectively. They are correlated, the correlation is compared with predetermined pilot data, and pilot positions are detected according to the comparison result. The pilot correlation is accumulated in the pilot correlation accumulator 419 and when the accumulated correlation is a maximum, a frequency offset can be estimated. Hence, when a frequency offset is 0, the maximum correlations of the successive symbols are identical. Thus, it is possible to accurately estimate the frequency offset.

So far the coarse frequency synchronization, that is, estimation and compensation of the integer part of a frequency offset has been described. Now, there will be given a description of fine frequency synchronization, that is, estimation and compensation of the decimal part of the frequency offset.

After the coarse frequency synchronization is acquired by estimating and compensating for a frequency offset being an integer multiple of a sub-carrier interval, the fine frequency synchronization is performed.

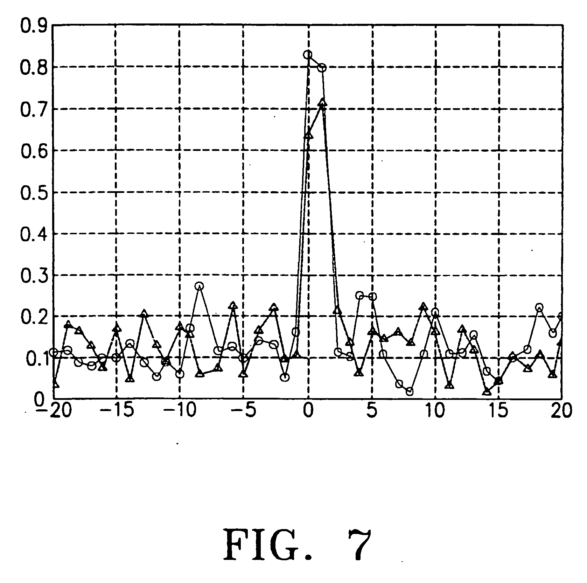

FIG. 7 is a graph showing pilot correlations for the fine frequency synchronization acquisition in a frequency domain where a frequency offset is a 1/2 of the sub-carrier interval. Referring to FIG. 7, when the frequency offset is a 1/2 of the sub-carrier interval, the maximum correlations of the successive data marked by circles and triangles are different because it is difficult to estimate the frequency offset being a 1/2 of the sub-carrier interval accurately.

Returning to FIG. 4, the pilot correlation accumulator 419 outputs correlations as many as the number of $C_m$ (-M ≤ m ≤ M) and a maximum, $C_{MAX}$ of the correlations output from the pilot correlation accumulator 419 is expressed as $C_{MAX} = MAC(C_m)$.

Assuming that $C_{MAX}$ is $C_m$, a final frequency offset can be estimated utilizing $C_m$ and its adjacent correlations $C_{m-1}$ and $C_{m+1}$ by

$$\hat{f}_o - \hat{f}_o - 0.5, \quad (C_{m-1} > C_{m+1} \text{ and } \frac{C_{m-1}}{C_{MAX}} > THRESHOLD$$

$$\hat{f}_o - \hat{f}_o + 0.5, \quad (C_{m-1} < C_{m+1} \text{ and } \frac{C_{m+1}}{C_{MAX}} > THRESHOLD$$

$$\hat{f}_o - \hat{f}_o, \quad \text{(all cases e)cept for } C_{m-1} > C_{m+1} \text{ and } \frac{C_{m-1}}{C_{MAX}} > THRESHOLD,$$

$$\text{and } C_{m-1} < C_{m+1} \text{ and } \frac{C_{m+1}}{C_{MAX}} > THRESHOLD$$

$$\ldots \ldots (6)$$

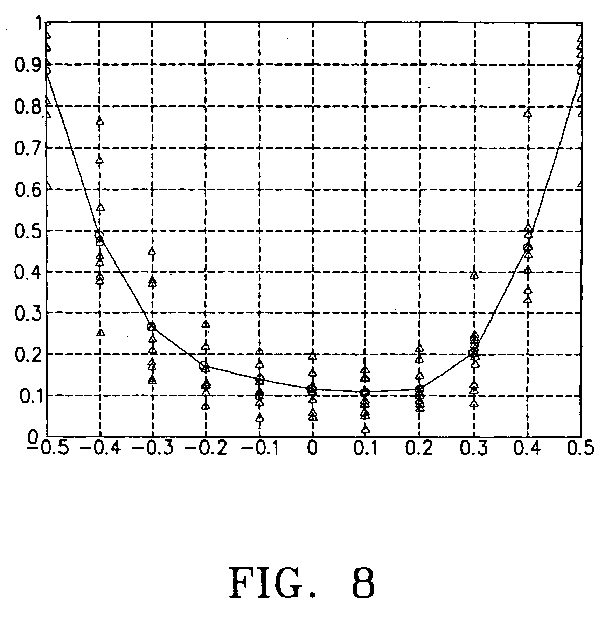

where to determine the threshold value THRESHOLD, $MAX\left(\frac{C_{m-1}}{C_{MAX}} \cdot \frac{C_{m+1}}{C_{MAX}}\right)$ is detected by simulation while the decimal part of the estimated frequency offset is increased by 0.1Hz from -0.5 to +0.5Hz. FIG. 8 is a graph showing ratios of the greater of adjacent correlations to a maximum correlation corresponding to the decimal part of the frequency offset in the simulation.

In FIG. 8, triangles at the same offset denote ratios of the greater of adjacent correlations to the maximum correlation and circles on a solid line denote the averages of the ratios when the decimal parts of frequency offsets exist in the simulation. If for THRESHOLD of 0.5, an estimated decimal part of the frequency offset is given as $0.4Hz \leq |f_{other}| \leq 0.5Hz$, a normalized frequency offset is within $\pm 0.1$Hz after compensation.

In accordance with the present invention as described above, it is possible to acquire coarse frequency synchronization and fine frequency synchronization, that is, to estimate the integer and decimal parts of a frequency offset by correlating two successive symbols. Therefore, the time required for acquiring the coarse and fine frequency synchronization is reduced even when the decimal part of the frequency offset is a 1/2 of a sub-carrier interval.

**Claims**

1. A frequency offset compensating apparatus in an orthogonal frequency division multiplexing, OFDM, system, comprising:

   a correlating portion (413) for demodulating input data by fast Fourier transformation, delaying a demodulated symbol by a predetermined period, and correlating a symbol demodulated during the delay to the delayed symbol;
   a pilot position detecting portion (415) for comparing the correlation with a predetermined pilot position and extracting a correlation corresponding to the pilot position; and
   a frequency offset compensating portion (423) for estimating a frequency offset from the extracted correlation and shifting the phase of pilot data by the estimated frequency offset.

2. The frequency offset compensating apparatus of claim 1, wherein the frequency offset compensating portion (423) estimates a frequency offset (421) to the extracted correlation if the extracted correlation is a predetermined maximum or by comparing the maximum correlation and adjacent correlations with a predetermined threshold.

3. The frequency offset compensating apparatus of claim 1 or 2, wherein the correlating portion comprises:

   a delay for delaying the demodulated symbol by the predetermined period; and
   a correlator for correlating the current demodulated symbol to the delayed symbol.

4. The frequency offset compensating apparatus of one of the claims 1 to 3, wherein the predetermined period is one symbol period.

5. The frequency offset compensating apparatus of one of the claims 1 to 4, wherein the pilot position detecting portion comprises:

   a pilot position shifter for storing pilot data transmitted by a transmitter and information about the positions of the pilot data and shifting the pilot data positions under predetermined control; and
   a pilot position detector for detecting a correlation among the outputs of the correlator according to a pilot position received from the pilot position shifter.

6. The frequency offset compensating apparatus of claim 1, wherein the frequency offset compensating portion comprises:

   an accumulator for accumulating the extracted correlation;
   a frequency offset estimator for estimating a maximum accumulated correlation to be the frequency offset if the accumulated correlation reaches a predetermined value; and
   a frequency offset compensator for shifting the phase of the pilot data according to the estimated frequency offset.

7. The frequency offset compensating apparatus of claim 1, wherein the frequency offset can be estimated up to twice the number of sub-carriers.

8. The frequency offset compensating apparatus of claim 2, wherein the frequency offset compensating portion comprises:

   an accumulator for accumulating the extracted correlation;
   a frequency offset estimator for detecting the maximum of extracted correlations and estimating the frequency offset by comparing the maximum correlation and the adjacent correlations with the predetermined threshold; and
   a frequency offset compensator for shifting the phase of pilot data by the estimated frequency offset.

9. The frequency offset compensating apparatus of claim 8, wherein the frequency offset estimator estimates the frequency offset by

$$\hat{f}_o - \hat{f}_o - 0.5, \quad (C_{m-1} > C_{m+1} \text{ and } \frac{C_{m-1}}{C_{MAX}} > THRESHOLD$$

$$\hat{f}_o - \hat{f}_o + 0.5, \quad (C_{m-1} < C_{m+1} \text{ and } \frac{C_{m+1}}{C_{MAX}} > THRESHOLD$$

$$\hat{f}_o - \hat{f}_o, \quad \text{(all cases e)cept for } C_{m-1} > C_{m+1} \text{ and } \frac{C_{m-1}}{C_{MAX}} > THRESHOLD,$$

$$\text{and } C_{m-1} < C_{m+1} \text{ and } \frac{C_{m+1}}{C_{MAX}} > THRESHOLD$$

$$\ldots\ldots(7)$$

where $C_{MAX}$ is the maximum correlation and $\hat{f}_o$ is the estimated frequency offset.

**10.** The frequency offset compensating apparatus of claim 9, wherein the threshold THRESHOLD is 0.5.

**11.** The frequency offset compensating apparatus of claim 2, wherein the frequency offset estimation is performed after coarse frequency synchronization is acquired.

**12.** A frequency offset compensating method in an OFDM system, comprising the steps of:

demodulating input data by fast Fourier transformation, delaying a demodulated symbol by a predetermined period, and correlating a symbol demodulated during the delay to the delayed symbol;
comparing the correlation with a predetermined pilot position and extracting a correlation corresponding to the pilot position; and
estimating a frequency offset to the extracted correlation and shifting the phase of pilot data by the estimated frequency offset.

**13.** The frequency offset compensating method of claim 12, wherein the estimating step can estimate a frequency offset to the extracted correlation if the extracted correlation is a predetermined maximum or by comparing the maximum correlation and adjacent correlations with a predetermined threshold.

**14.** The frequency offset compensating method of claim 12 or 13, wherein the correlation step comprises the steps of:

delaying the demodulated symbol by the predetermined period; and
correlating the current demodulated symbol to the delayed symbol.

**15.** The frequency offset compensating method of one of claims 12 to 14, wherein the predetermined period is one symbol period.

**16.** The frequency offset compensating method of one of claims 12 to 15, wherein the pilot position detection step comprises the steps of:

storing pilot data transmitted by a transmitter and information about the positions of the pilot data and shifting the pilot data positions under predetermined control; and
detecting a correlation corresponding to a pilot position shift among correlations.

**17.** The frequency offset compensating method of claim 12, wherein the frequency offset compensation step comprises the steps of:

accumulating the extracted correlation;
estimating a maximum accumulated correlation to be the frequency offset if the accumulated correlation reaches a predetermined value; and
shifting the phase of the pilot data according to the estimated frequency offset.

**18.** The frequency offset compensating method of claim 12, wherein the frequency offset can be estimated up to twice the number of sub-carriers.

**19.** The frequency offset compensating method of claim 13, wherein the frequency offset compensation step comprises the step of:

accumulating the extracted correlation;
detecting the maximum of extracted correlations and estimating the frequency offset by comparing the maximum correlation and the adjacent correlations with the predetermined threshold; and
shifting the phase of pilot data by the estimated frequency offset.

**20.** The frequency offset compensating method of claim 19, wherein the frequency offset estimator estimates the frequency offset by

$$\hat{f}_o - \hat{f}_o - 0.5, \quad (C_{m-1} > C_{m+1} \text{ and } \frac{C_{m-1}}{C_{MAX}} > THRESHOLD$$

$$\hat{f}_o - \hat{f}_o + 0.5, \quad (C_{m-1} < C_{m+1} \text{ and } \frac{C_{m+1}}{C_{MAX}} > THRESHOLD$$

$$\hat{f}_o - \hat{f}_o, \quad (\text{all cases e)cept for } C_{m-1} > C_{m+1} \text{ and } \frac{C_{m-1}}{C_{MAX}} > THRESHOLD,$$

$$\text{and } C_{m-1} < C_{m+1} \text{ and } \frac{C_{m+1}}{C_{MAX}} > THRESHOLD$$

$$\ldots \ldots (8)$$

where $C_{MAX}$ is the maximum correlation and $\hat{f}_o$ is the estimated frequency offset.

21. The frequency offset compensating method of claim 20, wherein the threshold THRESHOLD is 0.5.

22. The frequency offset compensating method of claim 13, wherein the frequency offset estimation is performed after coarse frequency synchronization is acquired.

**Patentansprüche**

1. Frequenzversatz-Kompensationsvorrichtung in einem OFDM(Orthogonal Frequency Division Multiplexing)-System, die umfasst:

   einen Korrelierabschnitt (413) zum Demodulieren von Eingangsdaten durch schnelle Fourier-Transformation, zum Verzögern ein demodulierten Symbols um eine vorgegebene Periode und zum Korrelieren eines demodulierten Symbols während der Verzögerung zu dem verzögerten Symbol;
   einen Pilotpositions-Erfassungsabschnitt (415) zum Vergleichen der Korrelation mit einer vorgegebenen Pilotposition und zum Extrahieren einer Korrelation, die der Pilotposition entspricht; und
   einen Frequenzversatz-Kompensationsabschnitt (423) zum Schätzen eines Freqeuenzversatzes aus der extrahierten Korrelation und zum Verschieben der Phase von Pilotdaten um den geschätzten Frequenversatz.

2. Frequenzversatz-Kompensationsvorrichtung nach Anspruch 1, wobei der Frequenzversatz-Kompensationsabschnitt (423), wenn die extrahierte Korrelation ein vorgegebenes Maximum ist, einen Frequenzversatz (421) zu der extrahierten Korrelation durch Vergleichen der maximalen Korrelation und angrenzender Korrelationen mit einem vorgegebenen Schwellenwert schätzt.

3. Frequenzversatz-Kompensationsvorrichtung nach Anspruch 1 oder 2, wobei der Korrelierabschnitt umfasst:

   ein Verzögerungsglied zum Verzögern des demodulierten Symbols um die vorgegebene Periode;
   einen Korrelator zum Korrelieren des aktuellen demodulierten Symbols zu dem verzögerten Symbol.

4. Frequenzversatz-Kompensiervorrichtung nach einem der Ansprüche 1 bis 3, wobei die vorgegebene Periode eine Symbolperiode ist.

5. Frequenzversatz-Kompensationsvorrichtung nach einem der Ansprüche 1 bis 4, wobei der Pilotpositions-Erfassungsabschnitt umfasst:

   eine Pilotpositions-Verschiebeeinrichtung zum Speichern von Pilotdaten, die durch einen Sender gesendet werden, sowie von Informationen über die Positionen des Pilotsignals und zum Verschieben der Pilotdaten-Positionen unter vorgegebener Steuerung; und

ein Pilotpositions-Erfassungseinrichtung zum Erfassen einer Korrelation zwischen den Ausgängen des Korrelators entsprechend einer von der Pilotpositions-Verschiebeeinrichtung empfangenen Pilotposition.

6. Frequenzversatz-Kompensationsvorrichtung nach Anspruch 1, wobei der Frequenzversatz-Kompensationsabschnitt umfasst:

eine Akkumuliereinrichtung zum Akkumulieren der extrahierten Korrelation;
eine Frequenzversatz-Schätzeinrichtung zum Schätzen einer maximalen akkumulierten Korrelation als den Frequenzversatz, wenn die akkumulierte Korrelation einen vorgegebenen Wert erreicht; und
eine Frequenzversatz-Kompensationsvorrichtung zum Verschieben der Phase der Pilotdaten entsprechend dem geschätzten Frequenzversatz.

7. Frequenzversatz-Kompensiervorrichtung nach Anspruch 1, wobei der Frequenzversatz bis zum Zweifachen der Zahl von Teilträgern geschätzt werden kann.

8. Frequenzversatz-Kompensiereinrichtung nach Anspruch 2, wobei der Frequenzversatz-Kompensierabschnit umfasst:

eine Akkumuliereinrichtung zum Akkumulieren der extrahierten Korrelation;
eine Frequenzversatz-Schätzeinrichtung zum Erfassen des Maximums extrahierter Korrelationen und zum Schätzen des Frequenzversatzes durch Vergleichen der maximalen Korrelation und der angrenzenden Korrelationen mit dem vorgebenen Schwellenwert; und
eine Frequenzversatz-Kompensiervorrichtung zum Verschieben der Phase von Pilotdaten um den geschätzten Frequenzversatz.

9. Frequenzversatz-Kompensiervorrichtung nach Anspruch 8, wobei die Frequenzversatz-Schätzeinrichtung einen Frequenzversatz durch

$$\hat{f}_o - \hat{f}_o - 0.5, \quad (C_{m-1} > C_{m+1} \text{ und } \frac{C_{m-1}}{C_{MAX}} > THRESHOLD$$

$$\hat{f}_o - \hat{f}_o + 0.5, \quad (C_{m-1} < C_{m+1} \text{ und } \frac{C_{m+1}}{C_{MAX}} > THRESHOLD$$

$$\hat{f}_o - \hat{f}_o, \quad \text{alle Fälle mit Ausnahme von} \quad C_{m-1} > C_{m+1} \text{ und } \frac{C_{m-1}}{C_{MAX}} > THRESHOLD,$$

$$\text{und} \quad C_{m-1} < C_{m+1} \text{ und } \frac{C_{m+1}}{C_{MAX}} > THRESHOLD$$

schätzt, wobei $C_{MAX}$ die Maximumkorrelation ist und $\hat{f}_o$ der geschätzte Frequenzversatz ist.

10. Frequenzversatz-Kompensiervorrichtung nach Anspruch 9, wobei der Schwellenwert THRESHOLD 0,5 beträgt.

11. Frequenzversatz-Kompensiervorrichtung nach Anspruch 2, wobei die Frequenzversatz-Schätzung durchgeführt wird, nachdem grobe Frequenzsynchronisation erreicht ist.

12. Frequenzversatz-Kompensierverfahren in einem OFDM-System, das die folgenden Schritte umfasst:

Demodulieren von Eingangsdaten durch schnelle Fourier-Transformation, Verzögern eines demodulierten Symbols um eine vorgegebene Periode und Korrelieren eines demodulierten Symbols während der Verzögerung zu dem verzögerten Symbol; und
Vergleichen der Korrelation mit einer vorgegebenen Pilotposition und Extrahieren einer Korrelation, die der Pilotposition entspricht; und

Schätzen eines Frequenzversatzes zu der extrahierten Korrelation und Verschieben der Phase von Pilotdaten um den geschätzten Frequenzversatz.

**13.** Frequenzversatz-Kompensierverfahren nach Anspruch 12, wobei der Schätzschritt, wenn die extrahierte Korrelation ein vorgegebenes Maximum ist, einen Frequenzversatz zu der extrahierten Korrelation durch Vergleichen der maximalen Korrelation und angrenzender Korrelationen mit einem vorgegebenen Schwellenwert schätzen kann.

**14.** Frequenzversatz-Kompensierverfahren nach Anspruch 12 oder 13, wobei der Korrelierschritt die folgenden Schritte umfasst:

Verzögern des demodulierten Symbols um die vorgegebene Periode; und
Korrelieren des aktuellen demodulierten Symbols zu dem verzögerten Symbol.

**15.** Frequenzversatz-Kompensierverfahren nach einem der Ansprüche 12 bis 14, wobei die vorgegebene Periode eine Symbolperiode ist.

**16.** Frequenzversatz-Kompensierverfahren nach einem der Ansprüche 12 bis 15, wobei der Pilotpositions-Erfassungsschritt die folgenden Schritte umfasst:

Speichern von durch einen Sender gesendeten Pilotdaten und von Informationen über die Positionen der Pilotdaten und Verschieben der Pilotdatenpositionen unter vorgegebener Steuerung; und
Erfassen einer Korrelation, die einer Pilotpositions-Verschiebung entspricht, unter Korrelationen.

**17.** Frequenzveratz-Kompensierverfahren nach Anspruch 12, wobei der Frequenzversatz-Kompensierschritt die folgenden Schritte umfasst:

Akkumulieren der extrahierten Korrelation;
Schätzen einer maximalen akkumulierten Korrelation als den Frequenzversatz, wenn die akkumulierte Korrelation einen vorgegebenen Wert erreicht; und
Verschieben der Phase des Pilotsignals entsprechend dem geschätzten Frequenzversatz.

**18.** Frequenzversatz-Kompensierverfahren nach Anspruch 12, wobei der Frequenzversatz bis zum Zweifachen der Zahl von Teilträgern geschätzt werden kann.

**19.** Frequenzversatz-Kompensierverfahren nach Anspruch 13, wobei der Frequenzversatz-Kompensierschritt den folgenden Schritt umfasst:

Akkumulieren der extrahierten Korrelation;
Erfassen des Maximums extrahierter Korrelationen und Schätzen des Frequenzversatzes durch Vergleichen der maximalen Korrelation und der angrenzenden Korrelationen mit dem vorgegebenen Schwellenwert; und
Verschieben der Phase von Pilotdaten um den geschätzten Frequenzversatz.

**20.** Frequenzversatz-Kompensierverfahren nach Anspruch 19, wobei die Frequenzversatz-Schätzeinrichtung die Frequenz durch

$$\hat{f}_o - \hat{f}_o - 0.5, \quad (C_{m-1} > C_{m+1} \text{ und } \frac{C_{m-1}}{C_{MAX}} > THRESHOLD$$

$$\hat{f}_o - \hat{f}_o + 0.5, \quad (C_{m-1} < C_{m+1} \text{ und } \frac{C_{m+1}}{C_{MAX}} > THRESHOLD$$

$$\hat{f}_o - \hat{f}_o, \quad \begin{array}{c}\text{alle Fälle mit}\\\text{Ausnahme von}\end{array} \quad C_{m-1} > C_{m+1} \text{ und } \frac{C_{m-1}}{C_{MAX}} > THRESHOLD,$$

$$\text{und} \quad C_{m-1} < C_{m+1} \text{ und } \frac{C_{m+1}}{C_{MAX}} > THRESHOLD$$

schätzt, wobei $C_{MAX}$ die Maximumkorrelation ist und $\hat{f}_O$ der geschätzte Frequenzversatz ist.

**21.** Frequenzversatz-Kompensierverfahren nach Anspruch 20, wobei der Schwellenwert THRESHOLD 0,5 beträgt.

**22.** Frequenzversatz-Kompensierverfahren nach Anspruch 13, wobei die Frequenzversatz-Schätzung durchgeführt wird, nachdem grobe Frequenzsynchronisation erreicht ist.

**Revendications**

**1.** Appareil de compensation du décalage de fréquence dans un système de Modulation par Répartition de Fréquence Orthogonale) (OFDM, pour "Orthogonal Frequency Division Multiplexing") comprenant :

une partie de corrélation (413) pour démoduler des données d'entrée par transformation de Fourier rapide, retarder un symbole démodulé d'une période prédéterminée et corréler un symbole démodulé pendant le retard en le symbole retardé ;
une partie de détection de position de pilote (415) pour comparer la corrélation à une position de pilote prédéterminée et extraire une corrélation correspondant à la position du pilote ; et
une partie de compensation du décalage de fréquence (423) pour estimer un décalage de fréquence à partir de la corrélation extraite et déphaser les données pilotes du décalage de fréquence estimé.

**2.** Appareil de compensation du décalage de fréquence selon la revendication 1, dans lequel la partie de compensation du décalage de fréquence (423) estime un décalage de fréquence (421) de la corrélation extraite si la corrélation extraite est un maximum prédéterminé ou en comparant la corrélation maximum et des corrélations adjacentes à un seuil prédéterminé.

**3.** Appareil de compensation du décalage de fréquence selon la revendication 1 ou 2, dans lequel la partie de corrélation comprend :

un retard pour retarder le symbole démodulé de la période prédéterminée ; et
un corrélateur pour corréler le symbole démodulé actuel avec le symbole retardé.

**4.** Appareil de compensation du décalage de fréquence selon l'une quelconque des revendications 1 à 3, dans lequel la période prédéterminée est une période d'un symbole.

**5.** Appareil de compensation du décalage de fréquence selon l'une des revendications 1 à 4, dans lequel la partie de détection de la position du pilote comprend :

un dispositif de décalage de position du pilote pour stocker des données pilotes émises par un émetteur et des informations concernant les positions des données pilotes et pour décaler les positions des données pilotes conformément à une commande prédéterminée ; et
un détecteur de position de pilote pour détecter une corrélation entre les sorties du corrélateur en fonction d'une position du pilote reçue du dispositif de décalage de position du pilote.

6. Appareil de compensation du décalage de fréquence selon la revendication 1, dans lequel la partie de compensation du décalage de fréquence comprend :

un accumulateur pour accumuler la corrélation extraite ;
un estimateur du décalage de fréquence pour estimer une corrélation accumulée maximum en tant que décalage de fréquence si la corrélation accumulée atteint une valeur prédéterminée ; et
un compensateur de décalage de fréquence pour déphaser les données pilotes en fonction du décalage de fréquence estimé.

7. Appareil de compensation du décalage de fréquence selon la revendication 1, dans lequel le décalage de fréquence peut être estimé jusqu'au double du nombre de sous-porteuses.

8. Appareil de compensation du décalage de fréquence selon la revendication 2, dans lequel la partie de compensation du décalage de fréquence comprend :

un accumulateur pour accumuler la corrélation extraite ;
un estimateur du décalage de fréquence pour détecter le maximum de corrélations extraites et estimer le décalage de fréquence en comparant la corrélation maximum et les corrélations adjacentes au seuil prédéterminé ; et
un compensateur du décalage de fréquence pour déphaser les données pilotes du décalage de fréquence estimé.

9. Appareil de compensation du décalage de fréquence selon la revendication 8, dans lequel l'estimateur du décalage de fréquence estime le décalage de fréquence conformément à :

$$\hat{f}_o = \hat{f}_o - 0{,}5, \quad (C_{m-1} > C_{m+1} \text{ et } \frac{C_{m-1}}{C_{MAX}} > \text{SEUIL}$$

$$\hat{f}_o = \hat{f}_o + 0{,}5, \quad (C_{m-1} < C_{m+1} \text{ et } \frac{C_{m+1}}{C_{MAX}} > \text{SEUIL}$$

$$\hat{f}_o = \hat{f}_o, \quad \text{(tous les cas excepté } C_{m-1} > C_{m+1} \text{ et } \frac{C_{m-1}}{C_{MAX}} > \text{SEUIL},$$

$$\text{et } C_{m-1} < C_{m+1} \text{ et } \frac{C_{m-1}}{C_{MAX}} > \text{SEUIL}$$

$$\cdots \quad (7)$$

où $C_{MAX}$ est la corrélation maximum et $\hat{f}_0$ est le décalage de fréquence estimé.

10. Appareil de compensation du décalage de fréquence selon la revendication 9, dans lequel le seuil SEUIL est égal à 0,5.

11. Appareil de compensation du décalage de fréquence selon la revendication 2, dans lequel l'estimation du décalage de fréquence est effectuée après qu'une synchronisation grossière de fréquence ait été acquise.

12. Appareil de compensation du décalage de fréquence dans un système OFDM, comprenant les étapes consistant à :

**EP 1 195 961 B1**

démoduler des données par transformation de Fourier rapide, retarder un symbole démodulé d'une période prédéterminée, et corréler un symbole démodulé pendant le retard du symbole retardé ;

comparer la corrélation avec une position de pilote prédéterminée et extraire une corrélation correspondant à la position du pilote ; et

estimer un décalage de fréquence de la corrélation extraite et déphaser les données pilotes du décalage de fréquence estimé.

13. Procédé de compensation du décalage de fréquence selon la revendication 12, dans lequel l'étape d'estimation peut estimer un décalage de fréquence de la corrélation extraite, si la corrélation extraite est un maximum prédéterminé ou en comparant la corrélation maximum et des corrélations adjacentes à un seuil prédéterminé.

14. Procédé de compensation du décalage de fréquence selon la revendication 12 ou 13, dans lequel l'étape de corrélation comprend les étapes consistant à :

retarder le symbole démodulé de la période prédéterminée ; et

corréler le symbole démodulé actuel avec le symbole retardé.

15. Procédé de compensation du décalage de fréquence selon l'une des revendications 12 à 14, dans lequel la période prédéterminée est une période d'un symbole.

16. Procédé de compensation du décalage de fréquence selon l'une des revendications 12 à 15, dans lequel l'étape de détection de la position du pilote comprend les étapes consistant à :

stocker des données pilotes émises par un émetteur et des informations concernant les positions des données pilotes et décaler les positions des données pilotes conformément à une commande prédéterminée ; et

détecter une corrélation correspondant à un décalage de la position du pilote parmi les corrélations.

17. Procédé de compensation du décalage de fréquence selon la revendication 12, dans lequel l'étape de compensation du décalage de fréquence comprend les étapes consistant à :

accumuler la corrélation extraite ;

estimer une corrélation accumulée maximum comme étant le décalage de fréquence si la corrélation accumulée atteint une valeur prédéterminée ; et

déphaser les données pilotes en fonction du décalage de fréquence estimé.

18. Procédé de compensation du décalage de fréquence selon la revendication 12, dans lequel le décalage de fréquence peut être estimé jusqu'au double du nombre de sous-porteuses.

19. Procédé de compensation du décalage de fréquence selon la revendication 13, dans lequel l'étape de compensation du décalage de fréquence comprend l'étape consistant à :

accumuler la corrélation extraite ;

détecter le maximum de corrélations extraites et estimer le décalage de fréquence en comparant la corrélation maximum et les corrélations adjacentes au seuil prédéterminé ; et

déphaser les données pilotes du décalage de fréquence estimé.

20. Procédé de compensation du décalage de fréquence selon la revendication 19, dans lequel l'estimateur du décalage de fréquence estime le décalage de fréquence conformément à :

$$\hat{f}_o = \hat{f}_o - 0{,}5\,, \quad (C_{m-1} > C_{m+1} \quad \text{et} \quad \frac{C_{m-1}}{C_{MAX}} > \text{SEUIL}$$

$$\hat{f}_o = \hat{f}_o + 0{,}5\,, \quad (C_{m-1} < C_{m+1} \quad \text{et} \quad \frac{C_{m+1}}{C_{MAX}} > \text{SEUIL}$$

$$\hat{f}_o = \hat{f}_o\,, \quad \text{(tous les cas excepté } C_{m-1} > C_{m+1} \text{ et } \frac{C_{m-1}}{C_{MAX}} > \text{SEUIL},$$

$$\text{et} \quad C_{m-1} < C_{m+1} \text{ et } \frac{C_{m+1}}{C_{MAX}} > \text{SEUIL}$$

$$\ldots \quad (8)$$

où $C_{MAX}$ est la corrélation maximum et $\hat{f}_o$ est le décalage de fréquence estimé.

**21.** Procédé de compensation du décalage de fréquence selon la revendication 20, dans lequel le seuil SEUIL est égal à 0,5.

**22.** Procédé de compensation du décalage de fréquence selon la revendication 13, dans lequel l'estimation du décalage de fréquence est effectuée après qu'une synchronisation grossière de fréquence ait été acquise.

# FIG. 1

EP 1 195 961 B1

# FIG. 2

EP 1 195 961 B1

# FIG. 3

300

| NULL | SYNC1 | SYNC2 | DATA SYMBOL #1 | DATA SYMBOL #2 | DATA SYMBOL #3 | DATA SYMBOL #4 | DATA SYMBOL #5 | DATA SYMBOL #6 | DATA SYMBOL #7 | DATA SYMBOL #8 | DATA SYMBOL #9 |

301

| DATA | DATA | PILOT | · · · | DATA | PILOT | DATA | DATA |

EP 1 195 961 B1

# FIG. 4

EP 1 195 961 B1

FIG. 5A

FIG. 5B

FIG. 6

FIG. 7

FIG. 8